# EUROPÄISCHE PATENTSCHRIFT

(11) **EP 0 524 455 B1**
(45) Veröffentlichungstag und Bekanntmachung des Hinweises auf die Patenterteilung: **10.01.1996**
(21) Anmeldenummer: 92110937.7
(22) Anmeldetag: 28.06.1992
(51) Int. Cl.: A61C 17/06

(54) **Zentrifuge**
Centrifuge
Centrifugeuse

(30) Priorität: 03.07.1991 DE 4121934
(43) Veröffentlichungstag der Anmeldung: 27.01.1993
(60) Teilanmeldung: 94117832.9
(73) Patentinhaber: Dürr-Dental GmbH & Co. KG, D-74321 Bietigheim-Bissingen (DE)
(72) Erfinder: Hofmann, Hans-Joachim, W-7064 Remshalden 3 (DE); Nonnenmacher, Eberhardt, W-7121 Ingersheim (DE); Schnepf, Jürgen, W-7100 Heilbronn-Böckingen (DE)
(74) Vertreter: Ostertag, Reinhard

(56) Entgegenhaltungen:
- WO-A-86/03669
- DE-A- 3 521 929
- DE-A- 3 916 742
- DE-C- 3 737 002

## Beschreibung

Die Erfindung betrifft eine Zentrifuge zum Abscheiden feiner Feststoffpartikel aus dem an einem dentalen Arbeitsplatz anfallenden Abwasser gemäß dem Oberbegriff des Anspruches 1.

Eine derartige Zentrifuge ist in der DE-OS 39 16 742 beschrieben.

Bei dieser bekannten Zentrifuge, die mit einem Zyklon verblockt ist, stellt die kegelstumpfförmige Leitwand, die in das Innere der Zentrifugentrommel reicht, sicher, daß keine direkte Strömungsmittelverbindung zwischen dem das zu zerlegende Gemisch zuführenden Speiserohr und der Überlauföffnung der Zentrifugentrommel möglich ist.Sie dient auch als Verlängerung der Zyklonwand.

Die bekannte Zentrifuge arbeitet als Nachrüstgerät, welches separat an einem Arbeitsplatz aufgestellt wird, zufriedenstellend und mit gutem Abscheidegrad auch für feine Amalgampartikel.

Für Amalgam-Abscheidezentrifugen, die in ein Speibecken-Kabinett oder dergleichen eingebaut werden sollen, sind kleinere radiale Abmessungen notwendig. Typischerweise beträgt für eine solche Einbau-Einheit der Trommeldurchmesser etwa 11 cm. Bei im übrigen unveränderter Gerätekonzeption ergibt sich aus einer solchen Geräteverkleinerung eine Verminderung des Amalgam-Abscheidegrades von einigen Prozent. Man könnte versuchen, durch Erhöhen der Trommeldrehzahl wieder auf vergleichbare Abscheideergebnisse zu kommen, wie bei den größeren Standalone-Zentrifugen.

Man müßte hierzu aber einen teureren Antriebsmotor verwenden. Auch wurde herausgefunden, daß durch reine Drehzahlerhöhung innerhalb vertretbaren Rahmens noch keine vollständige Kompensation der mit der Verkleinerung der Zentrifuge einhergehenden Verschlechterung des Abscheidegrades erhalten wird.

Durch die vorliegende Erfindung soll daher eine Zentrifuge gemäß dem Oberbegriff des Anspruches 1 so weitergebildet werden, daß mit einfachen mechanischen Mitteln, insbesondere ohne Änderung des Antriebes bei kleinen Trommelabmessungen eine Verbesserung der Abscheideleistung erhalten wird.

Diese Aufgabe ist erfindungsgemäß gelöst durch eine Zentrifuge gemäß Anspruch 1.

Bei der erfindungsgemäßen Zentrifuge erzielt man die Verbesserung des Abscheidegrades durch eine letztlich sehr einfache strömungstechnische Maßnahme, nämlich das Vorsehen einer speziellen dynamischen Spaltdichtung am oberen Ende der kegelförmigen Leitwand, die im Trommelinneren angeordnet das zu zerlegende Gemisch aus Feststoffpartikeln und Flüssigkeit unter die Innenfläche des in der Zentrifugentrommel umlaufenden Wasserringes einführt. Obwohl der apparative Aufwand nur gering ist, wird mit dieser Maßnahme eine Verbesserung des Abscheidegrades um etwa 4 % erzielt, so daß der Abscheidegrad insgesamt mit dem größerer Standalone-Zentrifugen vergleichbar ist, etwa bei 98 % liegt.

Vorteilhafte Weiterbildungen der Erfindung sind in Unteransprüchen angegeben. Die Weiterbildung der Erfindung gemäß dem Anspruch 2 ist im Hinblick auf einen möglichst langen und engen Dichtspalt und damit auf ein besonders zuverlässiges Unterbinden von Leckströmen von der Innenseite der Leitwand zur Überlauföffnung von Vorteil.

Verblockt man eine erfindungsgemäße, kleinere radiale Abmessungen aufweisende Zentrifuge direkt mit einem Luftabscheidezyklon, der koaxial mit der Zentrifugentrommel verschachtelt ist, um eine kurze axiale Gesamtlänge der Kombieinheit zu erzielen, so hat auch der Luftabscheidezyklon kleinere radiale Abmessungen und es ergeben sich zusätzliche Dichtprobleme zwischen dem zusammen mit der Zentrifugentrommel umlaufenden und ins Innere derselben geführten Luftabführrohr und feststehenden Gehäuseteilen. Mit den Weiterbildungen der Erfindung gemäß den Ansprüchen 3 und 4 wird auch bei kleinen radialen Abmessungen des Luftabscheidezyklones eine gute Abdichtung zu festehenden Gehäuseteilen erzielt und eine zwangsweise Rückführung auch im oberen Abschnitt des Luftabscheidezyklones abgeschiedener kleiner Restflüssigkeitsmengen zur Zentrifuge gewährleistet.

Nachstehend wird die Erfindung anhand eines Ausführungsbeispieles unter Bezugnahme auf die Zeichnung näher erläutert.

In dieser zeigen:
- Figur 1:: einen vertikalen axialen Schnitt durch eine kombinierte Luft/Feststoff-Abscheideeinheit für das an einem dentalen Arbeitsplatz anfallende Abwasser;
- Figur 2:: eine Aufsicht auf die Unterseite eines beschaufelten Überflansches einer Zentrifugentrommel der Abscheideeinheit nach Figur 1;
- Figur 3:: einen vertikalen Schnitt durch den Überlaufflansch nach Figur 2 längs der Schnittlinie III-III von Figur 2 und Figur 4;
- Figur 4:: eine Aufsicht auf die Oberseite des Überlaufflansches von Figur 2;
- Figur 5:: einen vertikalen axialen Schnitt durch ein Luftabführrohr eines Luftabscheidezyklones der Abscheideeinheit nach Figur 1;
- Figur 6:: eine Aufsicht auf das Luftabführrohr nach Figur 5; und
- Figur 7:: einen vertikalen axialen Schnitt durch einen oberen Gehäusedeckel des Luftabscheidezyklones der Abscheideeinheit nach Figur 1.

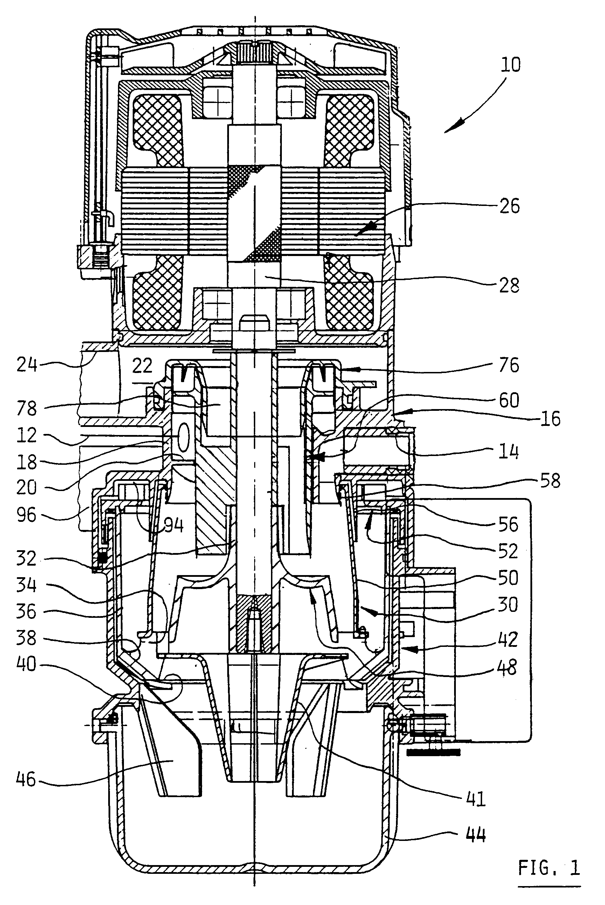

In Figur 1 ist eine insgesamt mit 10 bezeichnete Abscheideeinheit wiedergegeben, die aus dem an einem dentalen Arbeitsplatz anfallenden Abwasser Luftanteile und Feststoffpartikel abscheidet. Unter den Feststoffpartikeln befinden sich insbesondere auch Amalgampartikal, von denen ein Teil nur sehr kleinen Durchmesser aufweist.

Die Abscheideeinheit 10 hat einen ersten Einlaßstutzen 12, der über die nicht dargestellte Ablage des Arbeitsplatzes mit dem ebenfalls nicht dargestellten Speichelheber verbunden ist und luftreiches zu zerlegendes Gemisch erhält. Ein zweiter Einlaßstutzen 14 der Abscheideeinheit ist mit dem Speibecken des Arbeitsplatzes verbunden und erhält nur geringe Luftanteile enthaltendes Abwasser.

Die Einlaßstutzen 12 und 14 sind an ein oberes Gehäusesegment 16 angeformt, das eine zylindrische Zyklonwand 18 aufweist, in welche der Einlaßstutzen 12 ausmündet. Auf ihre Innenfläche ist im unteren Bereich eine wendelförmige Leitrippe 20 vorgesehen. Im oberen Abschnitt des Gehäusesegmentes 16 ist eine Luft-Auslaßkammer 22 ausgebildet, die mit einem Luft-Auslaßstutzen 24 in Verbindung steht. Die Luft-Auslaßkammer 22 ist oben durch das Gehäuse eines elektrischen Antriebsmotors 26 verschlossen, der vom Gehäusesegment 16 getragen ist. Der Antriebsmotor 26 wird so durch die abströmende Reinluft zusätzlich gekühlt.

Eine Motorwelle 28 trägt an ihrem unteren Ende eines insgesamt mit 30 bezeichnete Zentrifugentrommel. Ein Nabenabschnitt 32 der letzteren ist über radiale Stege 34 mit einer Umfangswand 36 verbunden. An letztere schließt sich nach unten eine trichterförmige Bodenwand 38 an, welche eine kreisförmige Schlamm-Ablauföffnung 40 begrenzt. Durch letztere erstreckt sich unter größerem radialem Abstand ein Pumpkonus 41 nach unten, der ebenfalls ein umlaufendes Teil der Zentrifugentrommel 30 darstellt.

Die Zentrifugentrommel 30 läuft im Inneren eines mittleren Gehäusesegmentes 42 um, welches am unteren Ende lösbar einen Sammelbehälter 44 für abgeschiedenes Amalgam trägt. An das Gehäusesegment 42 angeformte Beruhigungsflügel 46 erstrecken sich um den Pumpkonus 41 herum in den oberen Abschnitt des Sammelbehälters 44.

An den Nabenabschnitt 32 ist ein Umlenkkörper 48 angeformt, dessen Umfangsfläche kegelförmig ist und dessen obere Stirnfläche kreisbogenförmigen Querschnitt aufweist.

Mit den Stegen 34 ist ferner eine kegelförmige Leitwand 50 fest verbunden, deren unterer Abschnitt zylindrisch und deren oberer Abschnitt kegelförmig ist. Der Winkel, den eine Mantellinie der Leitwand 50 mit der Achse der Zentrifugentrommel 30 einschließt, liegt zwischen 3 und 7°, vorzugsweise bei etwa 5°.

Das obere Ende der Umfangswand 36 trägt einen radial nach innen kragenden Überlaufflansch 52, der eine Überlauföffnung 54 begrenzt.

Der untere Abschnitt des oberen Gehäusesegmentes 16 ist deckelartig ausgebildet und übergreift dicht das obere Ende des mittleren Gehäusesegmentes 42. Von der Deckenwand dieses Deckels hängt eine Dichtwand 56 nach unten, deren Außendurchmesser kleiner ist als der Durchmesser der Überlauföffnung 54, so daß zwischen der Dichtwand 56 und dem Rand der Überlauföffnung 54 ein ringförmiger Spalt verbleibt. Die Innenfläche der Dichtwand 56 ist konisch. Ihr Anstellwinkel entspricht dem der Leitwand 50, und die gesamte Anordnung ist so gewählt, daß zwischen der zusammen mit der Zentrifugentrommel 30 umlaufenden Leitwand 50 und der Dichtwand 56 ein schmaler gestreckter Dichtspalt verbleibt. Von der Deckenwand des vom unteren Abschnitt des oberen Gehäusesegmentes 16 gebildeten Deckels hängt ferner eine zur Dichtwand 56 konzentrische, jedoch weiter innenliegende zweite Dichtwand 58 senkrecht nach unten, deren Außenfläche zylindrisch ist und das geringfügig nach innen umgekantete obere Ende der Leitwand 50 unter geringem Laufspiel durchsetzt.

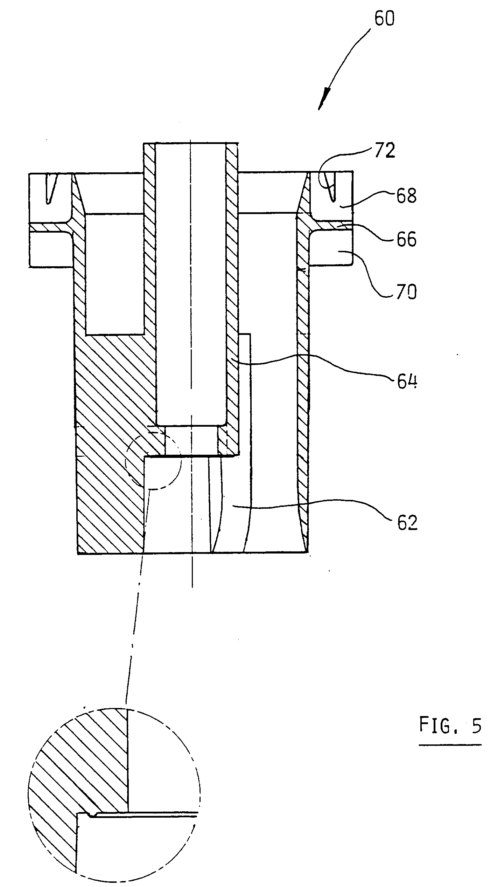

Über der Zentrifugentrommel 30 liegend trägt die Motorwelle 28 ein Luftabführrohr 60, welches über drei in Umfangsrichtung verteilte Stege 62 (vgl. Figur 5) mit einem Nabenteil 64 verbunden ist. Die untere Randkante des Luftabführrohres 60 liegt beim Mittelpunkt der die Oberseite des Umlenkkörpers 48 bildenden Kreisrinne.

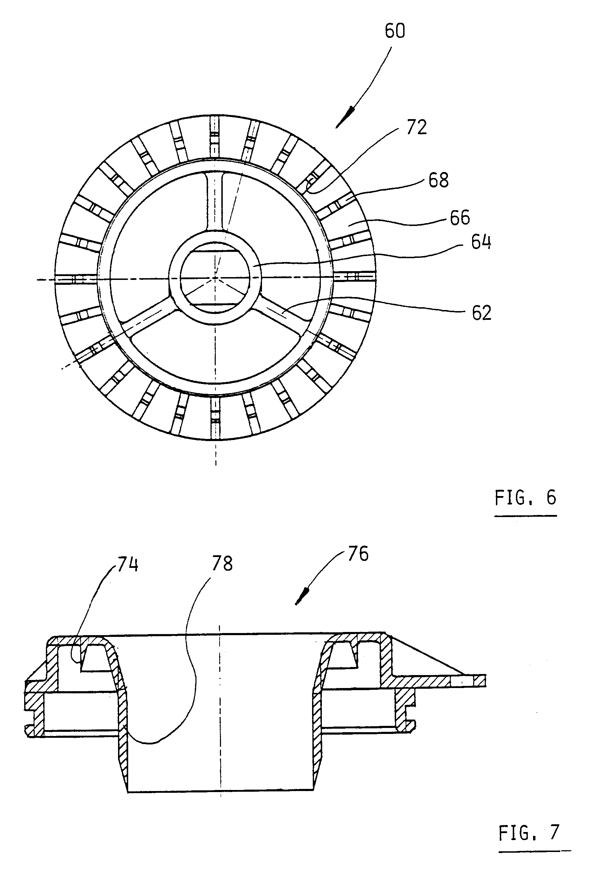

Unter Abstand von seinem oberen Ende hat das Luftabführrohr 60 einen radialen Flansch 66, der auf seiner Oberseite mit Pumpflügeln 68 und auf seiner Unterseite mit Pumpflügeln 70 besetzt ist. Wie insbesondere aus den Figuren 5 und 6 ersichtlich, haben die oberen Pumpflügel 68 jeweils eine spitzwinklige dreieckige Ausnehmung 72, in welche eine entsprechend spitzwinklige dreieckigen Querschnitt aufweisende Sperrippe 74 im engen Gleitspiel eingreifen kann, die von der Unterseite eines Zyklon-Abschlußdeckels 76 herabhängt. Der Abschlußdeckel 76 hat einen mittigen, herabhängenden Verbindungsstutzen 78, der unter kleinem Laufspiel über der Innenfläche des oberen Endes des Luftabführrohres 60 liegt.

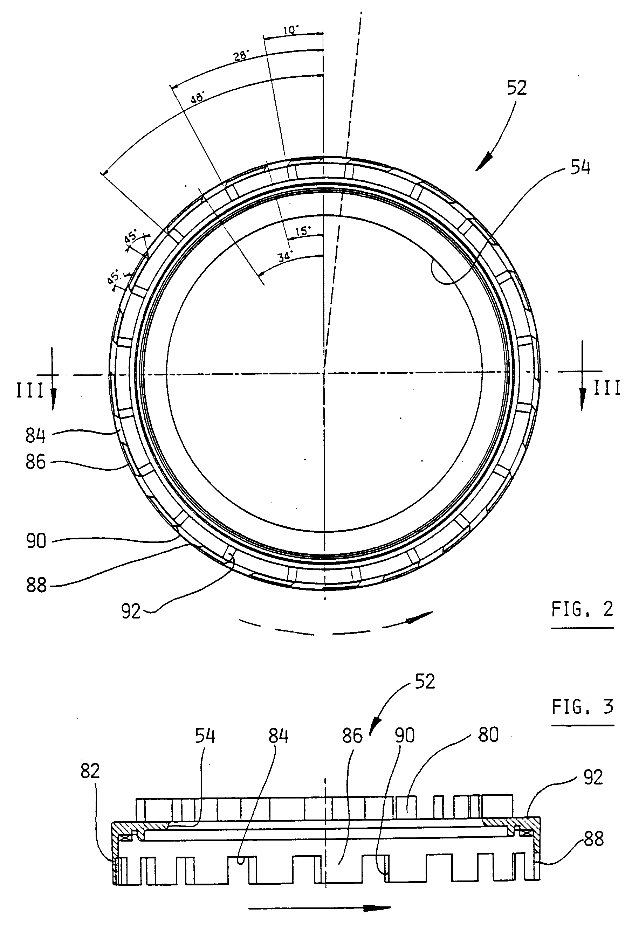

Wie insbesondere aus den Figuren 2 und 3 ersichtlich ist, trägt der Überlaufflansch 52 auf seiner Oberseite Pumpflügel 80. Diese sind nicht unter gleichbleibender Winkelteilung angeordnet, vielmehr schwankt der Winkelabstand aufeinanderfolgender Pumpflügel statistisch um den Mittelwert 11. Der Schwankungsbereich beträgt +/-2°. An den äußeren Rand des Überlaufflansches 52 ist eine herabhängende Schürze 82 angeformt, die zur unteren Randkante hin auslaufende Fenster 84 aufweist, so daß sich einzelne Pumpflügel 86 ergeben. Die in Drehrichtung gesehen vorderen und hinteren Begrenzungsflächen 88, 90 der Fenster 84 sind unter gleichem Winkel gegen einen durch ihre Mitte gezogenen Radiusstrahl verkippt, der beim betrachteten Ausführungsbeispiel 45° beträgt. Die Teilung der Fenster schwankt mit einer Amplitude von +/-2° statistisch um einen Mittelwert von 17°, während die Teilung der Pumpflügel 86 unabhängig um +/-2° um einen Mittelwert von 17° schwankt.

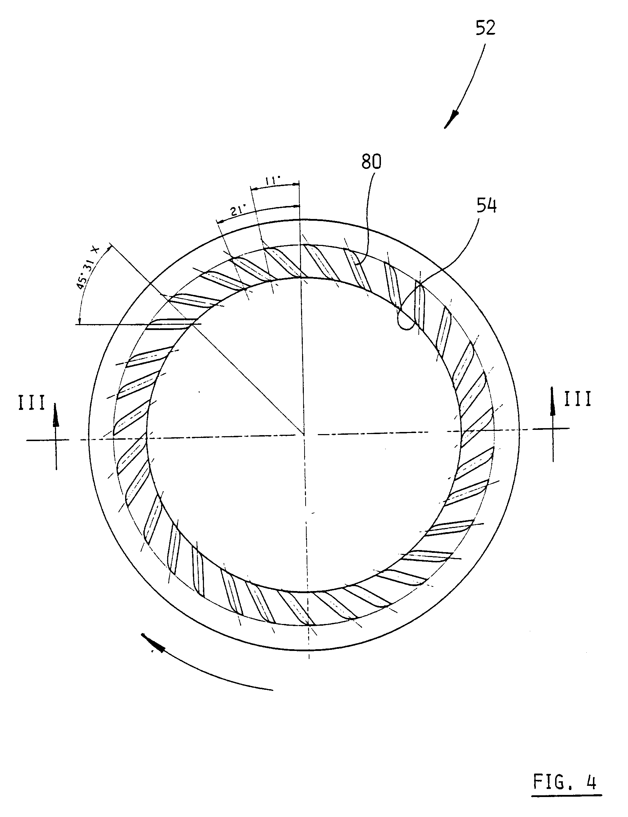

Wie aus den Figuren 3 und 4 gut ersichtlich, trägt die Unterseite des Überlaufflansches 52 ferner kleine Pumpflügel 92, die winkelmäßig mit der Vorderkante der hinteren Begrenzungsfläche 90 eines Fensters 84 fluchten.

Wie aus Figur 1 ersichtlich, begrenzen der obere Endabschnitt des mittleren Gehäusesegmentes 42 und der untere, als Deckel ausgebildete Abschnitt des oberen Gehäusesegmentes 16 zusammen eine Ringnut, in welcher die Schürze 82 des Überlaufflansches 52 läuft. Über die Pumpflügel 92, die Pumpflügel 86 und den nur kleinen Spalt zwischen der Außenfläche der Schürze 82 und der Innenfläche des als Deckel ausgebildeten unteren Endabschnittes des Gehäusesegmentes 16 ist gewährleistet, daß ein durch diesen Deckel und die Oberseite der Zentrifugentrommel 30 begrenzter Reinwasser-Auslaßraum 94 zuverlässig dynamisch gegen das Innere des die Zentrifugentrommel 30 umgebenden mittleren Gehäusesegmentes 42 abgedichtet ist, so daß von dort keine Verunreinigungen in den Reinwasser-Auslaßraum 94 gelangen können. Letzterer steht mit einem Reinwasser-Auslaßstutzen 96 in Verbindung, der mit der Abwasserkanalisation verbunden ist.

## Patentansprüche

1. Zentrifuge zum Abscheiden feiner Feststoffpartikel aus dem an einem dentalen Arbeitsplatz anfallenden Abwasser, mit
a) einem Gehäuse (16, 42);
b) einer in diesem umlaufenden Zentrifugentrommel, die aufweist: eine zylindrische Umfangswand (36), eine Bodenwand (38), die vorzugsweise eine zu einem Sammelbehälter (44) führende Ablauföffnung (40) aufweist, einen vom oberen Rand der Umfangswand (36) radial nach innen weisenden und eine Überlauföffnung (54) begrenzenden Überlaufflansch (52) sowie eine kegelförmige Leitwand (50), die sich von oben durch die Überlauföffnung (54) hindurch erstreckt und deren im Trommelinneren liegendes Ende größeren Durchmesser aufweist als die Überlauföffnung (54);
c) einem auf die Zentrifugentrommel (30) arbeitenden Antriebsmotor (26); und
d) einem gehäusefesten Speiserohr für das zu zerlegende Gemisch aus Feststoffpartikeln und Flüssigkeit,
gekennzeichnet durch
e) eine gehäusefeste Dichtwand (56) mit zum oberen Ende der Leitwand (50) komplementärer Innenform, welche unter so kleinem Abstand über der Außenfläche der Leitwand (50) steht, daß zwischen der Leitwand (50) und der Dichtwand (56) ein schmaler, gestreckter Dichtspalt verbleibt, welche sich in das Innere der Zentrifugentrommel (30) hinein erstreckt, und deren Außendurchmesser kleiner ist als der Durchmesser der Überlauföffnung (54).

2. Zentrifuge nach Anspruch 1, dadurch gekennzeichnet, daß der Anstellwinkel der Leitwand (50) zur Achse der Zentrifugentrommel (30) 3 bis 7°, vorzugsweise etwa 5° beträgt.

3. Zentrifuge nach einem der Ansprüche 1 bis 2, wobei das Speiserohr durch das untere Ende einer Zyklonwand (18) gebildet ist, die unter kleinem radialem Spiel in das obere Ende der Leitwand (50) greift, und wobei mit der Zentrifugentrommel (30) ein Luftabführrohr (60) drehfest verbunden ist, welches zugleich eine umlaufende Innenwand des Zyklons bildet und mit einer Unterdruckquelle verbindbar ist, und wobei ein die Zyklonwand (18) am oberen Ende verschließender Deckel (76) mit einer Sperrippe (74) versehen ist, die in Ausnehmungen (72) unter kleinem Spiel eingreift, welche in mit dem oberen Ende des Luftabführrohres (60) verbundenen Pumpflügeln (68) vorgesehen sind, dadurch gekennzeichnet, daß die Pumpflügel (68) auf einem radialen Flansch (66) angeordnet sind, der unter kleinem radialem Spiel bis zur Innenfläche der Zyklonwand (18) geführt ist.

4. Zentrifuge nach Anspruch 3, dadurch gekennzeichnet, daß die Unterseite des Sperrflansches (66) mit weiteren Pumpflügeln (70) besetzt ist.

## Claims

1. Centrifuge for separating fine solids particles from the waste-water produced at a dental work station, comprising
a) a housing (16, 42);
b) a centrifuge drum which rotates in the housing and which has: a cylindrical circumferential wall (36), a base wall (38) which preferably has an outlet opening (40) leading to a collection vessel (44), an overflow flange (52) which extends radially inward from the upper edge of the circumferential wall (36) and defines an overflow opening (54), and a conical baffle wall (50) which extends through the overflow opening (54) from above and the end of which lying in the interior of the drum has a larger diameter than the overflow opening (54);
c) a drive motor (26) which acts on the centrifuge drum (30); and
d) a feed pipe, which is fixed to the housing, for feeding the mixture of solids particles and liquid which is to be separated,
characterised by
e) a sealing wall (56) which is fixed to the housing and has an internal shape complementary to the upper end of the baffle wall (50) and which is located at such a small distance above the outer surface of the baffle wall (50) that a narrow, elongate sealing gap remains between the baffle wall (50) and the sealing wall (56) and which extends into the interior of the centrifuge drum (30) and the external diameter of which is smaller than the diameter of the overflow opening (54).

2. Centrifuge according to claim 1, characterised in that the angle of inclination of the baffle wall (50) to the axis of the centrifuge drum (30) is from 3 to 7°, preferably approximately 5°.

3. Centrifuge according to one of claims 1 and 2, wherein the feed pipe is formed by the lower end of a cyclone wall (18) that engages with a small amount of radial clearance into the upper end of the baffle wall (50), and wherein an air removal pipe (60) is rigidly connected to the centrifuge drum (30), which air removal pipe at the same time forms a revolving inner wall of the cyclone and can be connected to a vacuum source, and wherein a lid (76) which closes the cyclone wall (18) at the upper end is provided with a locking rib (74) which engages with a small amount of clearance in recesses (72) provided in pump vanes (68) connected to the upper end of the air removal pipe (60), characterised in that the pump vanes (68) are arranged on a radial flange (66) which extends as far as the inner surface of the cyclone wall (18) with a small amount of radial clearance.

4. Centrifuge according to claim 3, characterised in that the underside of the locking flange (66) is fitted with further pump vanes (70).

## Revendications

1. Centrifugeuse pour débarrasser l'eau usée d'un poste de travail dentaire de fines particules solides, comprenant
a) un carter(16, 42) ;
b) un tambour de centrifugeuse tournant dans ce dernier, qui présente : une paroi périphérique circulaire (36), une paroi de fond (38) présentant, de préférence, un orifice d'écoulement (40) menant dans un récipient collecteur (44), un flasque de trop-plein (52) pointant radialement vers l'intérieur depuis le bord supérieur de la paroi périphérique (36) et délimitant un orifice de trop-plein (54), ainsi qu'une paroi de guidage conique (50) qui s'étend depuis le haut à travers l'orifice du trop-plein (54) et dont l'extrémité située à l'intérieur du tambour présente un diamètre plus grand que l'orifice du trop-plein (54) ;
c) un moteur d'entraînement (26) agissant sur le tambour (30) de la centrifugeuse ; et
d) un tube d'alimentation fixé au carter pour le mélange de particules solides et de liquide à séparer,
caractérisée par
e) une paroi d'étanchéité (56) fixée au carter dont la forme intérieure est complémentaire à l'extrémité supérieure de la paroi de guidage (50), qui est placée au-dessus de la surface extérieure de la paroi de guidage (50) avec un écart si faible qu'entre la paroi de guidage (50) et la paroi d'étanchéité (56), il reste une fente d'étanchéité mince et allongée qui s'étend à l'intérieur du tambour (30) de la centrifugeuse et dont le diamètre extérieur est inférieur au diamètre de l'orifice du tropplein (54).

2. Centrifugeuse selon la revendication 1, caractérisée en ce que l'angle d'inclinaison de la paroi de guidage (50) par rapport à l'axe du tambour (30) de la centrifugeuse est de 3 à 7°, de préférence d'environ 5°.

3. Centrifugeuse selon la revendication 1 ou 2, sachant que le tuyau d'alimentation est formé par l'extrémité inférieure d'une paroi de cyclone (18) qui est enclenchée avec un faible jeu radial dans l'extrémité supérieure de la paroi de guidage (50), et sachant qu'un tuyau d'évacuation d'air (60) est relié au tambour (30) de la centrifugeuse de manière fixe en rotation, tuyau qui forme simultanément une paroi intérieure circulaire du cyclone et peut être relié à une source de vide, et sachant qu'un couvercle (76) fermant la paroi du cyclone (18) à l'extrémité supérieure est muni d'une nervure de blocage (74) qui s'enclenche avec un faible jeu dans des évidements (72) prévus dans des ailettes de pompe (68) reliées à l'extrémité supérieure du tuyau d'évacuation d'air (60), caractérisée en ce que les ailettes de pompe (68) sont disposées sur un flasque radial (66) qui s'étend avec un faible jeu radial jusqu'à la surface intérieure de la paroi (18) du cyclone.

4. Centrifugeuse selon la revendication 3, caractérisée en ce que le dessous du flasque de blocage (66) est muni d'ailettes de pompe supplémentaires (70).
